# EUROPEAN PATENT APPLICATION

(11) **EP 2 253 592 A1**
(43) Date of publication of application: **24.11.2010**
(21) Application number: 09160155.9
(22) Date of filing: 13.05.2009
(51) Int. Cl.: C02F 1/461, C02F 1/469, C25B 11/04

(54) **A method for preparing a coated current collector, a coated current collector and an apparatus for de-ionizing water comprising such current collector**

(71) Applicant: Voltea B.V., 3013 AL Rotterdam (NL)
(72) Inventor: van der Wal, Bert, 2333 AL Leiden (NL); Reinhoudt, Hank Robert, 2333 AL Leiden (NL); MacPhail, Michel, 2333 AL Leiden (NL)
(74) Representative: Fluit, Jeroen

(57) **Abstract**

The present invention relates to improved flow through capacitors and methods for purifying aqueous solutions. Despite recent developments, the capacity of the electrodes that are used in FTC stacks still demands improvement. It has been surprisingly found that at least one of these objects is met by FTC electrodes that are made with current collectors coated on both sides which are dried at a temperature range from 15°C to120 °C.

## Description

### Field of the invention

The present invention relates to a method for preparing a coated current collector, comprising:
a preparing a coating paste comprising:
   i. dry coating materials comprising:
      - 50 - 98.5 dry mass weight % of carbon having a specific surface area of at least 500 m2/g;
      - 1 - 40 dry mass weight % of binder;
      - 0.5 - 30 dry mass weight % of polyelectrolyte; and
   ii. 20 - 80 % based on the total paste of solvent
b applying the coating paste on one side of the current collector; and,
c applying the coating paste on another side of the current collector.

### Description of the related art

In recent years one has become increasingly aware of the impact of human activities on the environment and the negative consequences this may have. Ways to reduce, reuse and recycle resources are becoming more important. In particular, clean water is becoming a scarce commodity. Therefore, various methods and devices for purifying water have been published.

A method for water purification is by capacitive deionisation, using an apparatus provided with a flow through capacitor (FTC) for removal of ions in water. The FTC functions as an electrically regenerable cell for capacitive deionisation. By charging electrodes, ions are removed from an electrolyte and are held in an electric double layers at the electrodes. The electrodes can be (partially) electrically regenerated to desorb such previously removed ions without adding chemicals.

The apparatus for removal of ions comprises one or more pairs of spaced apart electrodes (a cathode and an anode) and a spacer, separating the electrodes and allowing water to flow between the electrodes. The electrodes may be made by coating a current collectors with a coating. The current collectors are electrically conductive and transport charge in and out of the coating.

The apparatus is provided with a housing comprising a water inlet for letting water in the housing and a water outlet for letting water out of the housing. In the housing of the apparatus for removal of ions the layers of electrodes and spacers are stacked in a "sandwich" fashion by compressive force, normally by mechanical fastening.

A charge barrier may be placed adjacent to an electrode of a flow-through capacitor. The term charge barrier refers to a layer of material which is permeable or semi-permeable and is capable of holding an electric charge. Ions are retained or trapped, on the side of the charge barrier towards which the like-charged ions migrate. A charge barrier may allow an increase in ion removal efficiency, which in turn allows energy efficient ion removal.

Carbon based electrodes are a crucial component of FTC systems and their main function is to store ions during desalination. The capacity of the electrodes that are used in FTC stacks may demand improvements. At present the capacity of the commercially electrodes suitable for FTC, such as the PACMM series electrodes ex Material Methods (trademark), is in the order of 10-25 F/g.

For reference, the electrodes of electrical double layer capacitors (also known as super capacitors) in general have a capacity of up to about 120 F/g, according to B.E. Conway, Electrochemical Super capacitors: Scientific Fundamentals and Technological Applications (Springer, 1999, ISBN: 0306457369). Commercially available electrodes consist of activated carbon particles which are fixed in a Teflon matrix. These commercial electrodes are used in fuel cells as well as in batteries, such as super capacitors. When such super capacitor electrodes are used in FTC, the measured capacity according to the method in the examples below is in the order of up to 25 F/g and ion storage capacity is relative low mainly because of poor wetting of the electrodes.

In FTC, salt is removed from water and therefore the carbon based electrodes should allow the penetration of water. However, the Teflon used in commercial electrodes expels water, which leads to suboptimal performance in FTC. Carbon based electrodes, which do not use Teflon as a binder and are easily wettable by water are therefore being developed. In those electrodes the carbon particles are bonded together and onto the graphite current collector, for example by using a glue, for example a water based polyacrylate glue or epoxy resin. In order to increase the ion storage capacity of the electrodes, the carbon particles are blended with cationic or anionic polyelectrolytes or mixtures thereof.

The carbon coating of the current collector may have a relatively low density of smaller than ca 0.3 g/cm³ of the dry weight. This may be caused by the carbon particles which may have a high degree of micro- and/or mesoporosity and in addition the carbon coatings may contain a high degree of void space. For example, less than half of the coating volume may contain carbon particles and the remaining space may be either filled with air or with water. In order to develop high density electrodes it is required that more of the empty space in the coating is filled with carbon particles, which in turn should also lead to an increase in ion storage capacity.

Therefore, it is an object of the present invention to provide improved coated current collectors, for use in an apparatus for deionization of water.

### Summary of the invention

Accordingly, the present invention provides a method for preparing a coated current collector, comprising:
a preparing a coating paste comprising:
   i. dry coating materials comprising:
      - 50 - 98.5 dry mass weight % of carbon having a specific surface area of at least 500 m2/g;
      - 1 - 40 dry mass weight % of binder;
      - 0.5 - 30 dry mass weight % of polyelectrolyte; and
   ii. 20 - 80 % based on the total paste of solvent
b applying the coating paste on one side of the current collector;
c applying the coating paste on another side of the current collector; and,
d drying the coating of the current collector at a temperature range from about 15°C to about 120°C.

The coating may be applied at both sides simultaneously. Drying the coated current collector may comprise drying at a temperature range from about 30°C to 120°C. The temperature range may exclude a temperature of about 70°C. The solvent may be an aqueous solvent. The temperature range may comprise a temperature from about 15°C to smaller than about 70°C and from larger than 70°C to smaller than 120°C. The temperature range may comprise a temperature from about 30°C to about 69°C and from larger than 71 °C to smaller than 120°C.

The invention may further relate to a method for preparing a coated current collector, comprising the steps of
a preparing a coating paste comprising:
   i. dry coating materials comprising:
      - 50 - 98.5 dry mass weight % of carbon having a specific surface area of at least 500 m2/g;
      - 1 - 40 dry mass weight % of binder;
      - 0.5 - 30 dry mass weight % of polyelectrolyte; and
   ii. 20 - 80 % based on the total paste of solvent
b applying the wet coating paste on one side of the current collector;
c applying the wet coating paste on another side of the current collector; and,
d drying the coated current collector so that the thickness of the wet coating paste layers shrinks with more than 21%, more preferably with more than 25%, even more preferably with more than 30% and most preferably with more than 35%.

The coating may be provided on both sides of the current collector simultaneously.

The invention may relate to a double sided coated current collector, the coating comprising:
a 50 - 98.5 dry mass weight % of carbon having a specific surface area of at least 500 m2/g;
b 1 - 40 dry mass weight % of binder; and,
c 0.5 - 30 dry mass weight % of polyelectrolyte, wherein the abrasiveness of the coating is such that less than 9.25 µm, preferably les than 6 µm and even more preferably less than 3.13 µm of the coating is removed per stroke in a linear scrubbing rig with a weight of 308Kg/cm scrubbing over the coating.

The invention may relate to a double sided coated current collector, the coating comprising:
a 50 - 98.5 dry mass weight % of carbon having a specific surface area of at least 500 m2/g;
b 1 - 40 dry mass weight % of binder; and,
c 0.5 - 30 dry mass weight % of polyelectrolyte, wherein the dry mass density of the coating is larger than 0.3 preferably larger than 0.35 and even more preferably larger than 0.4 g/cm³.

The invention may relate to a coated current collector, further comprising a charge barrier applied to the coating layer, the charge barrier comprising a membrane, selective for anions and/or cations, the charge barrier may also be applied to the coating layer as a further coating layer or as a laminate layer.

The invention may relate to an apparatus for de-ionizing water comprising the coated current collector according to the invention.

The coated current collector according to the invention has a higher carbon density is stronger and has a improved ion storage capacity. In addition, the method should also allow large scale production at similar or lower cost compared to commercially available Teflon® based electrodes.

The main reason for the higher carbon density may be the lower degree of void space in the coated current collectors according to the invention. The carbon paste that is used for making the coated electrodes has a high water content. The high water content is required, because at lower water levels the paste becomes too viscous, which makes it difficult if not impossible to spread onto the current collector. A rapid drying of the electrodes at elevated temperatures, immediately after the coating has been applied, may lead to a collapse of the electrode layer, which in turn would give an increase in the density.

The coated current collectors of the present invention and the method to provide said coated current collectors provide a higher ion storage capacity than the Teflon® based electrodes of the prior art.

These and other aspects, features and advantages will become apparent to those of ordinary skill in the art from a reading of the following detailed description and the appended claims. For the avoidance of doubt, any feature of one aspect of the present invention may be utilised in any other aspect of the invention. It is noted that the examples given in the description below are intended to clarify the invention and are not intended to limit the invention to those examples per se. Similarly, all percentages are weight/weight percentages unless otherwise indicated. Numerical ranges expressed in the format "from x to y" are understood to include x and y. When for a specific feature multiple preferred ranges are described in the format "from x to y", it is understood that all ranges combining the different endpoints are also contemplated.

### Brief description of the drawings

Embodiments of the invention will now be described, by way of example only, with reference to the accompanying schematic drawings in which corresponding reference symbols indicate corresponding parts and in which:
Figure 1 is a graph of the amount of NaCl removed by the apparatus for de-ionizing water using a current collector prepared with the method according to the invention;
Figure 2 is a graph of the conductivity of water coming from the apparatus for de-ionizing water using a current collector prepared with the method according to the invention; and,
Figure 3 is a graph of the total amount of NaCl removed per gram of activated carbon in the apparatus for de-ionizing water using a current collector prepared with the method according to the invention.

### Detailed description of the invention

Carbon electrodes, which are used in FTC cells may be activated by bringing them in a concentrated salt solution. High neutral salt levels in the electrode promote the ion removal capacity as well as ion conductivity and hence speed of removal. However, during use of the FTC cells these ions can slowly leach out of the electrode material, which leads to a reduced electrode overall capacity to remove salt ions from a feed water solution as well as reduced kinetics of salt removal. In addition, high salt levels are required because of the presence of pore volume in the electrode matrix.

Polyelectrolytes are being used to activate the carbon electrodes. One advantage of the polyelectrolyes is that they can adsorb onto the carbon particles, which prevent them from leaching out of the carbon electrode. Another advantage is that lower levels of polyelectrolytes are needed compared to when monovalent salt may be used, because no material is wasted to fill up pore volume.

### Polyelectrolyte

The polyelectrolytes, may be both anionic or cationic. The carbon electrodes containing the polyelectrolytes can be used in FTC cells that are built either with or without ion selective membranes. In principle either anionic or cationic polyelectrolytes can be used for both the anode and the cathode. Also mixtures of anionic and cationic polyelectrolytes can be used as well as zwitterionic polymers for both the anode and the cathode. Nevertheless, it is preferred to use cationic polymers for the anode and anionic polymers for the cathode to obtain an increase in ion storage capacity.

Suitable cationic polyelectrolytes in the context of the present invention are for example nitrogen based polyelectrolytes. Commercially available polyelectrolytes of this type are poly ethylene imines, such as Lupasol ® (ex BASF), polyquaterniums, such as the Merquat ® polyquaterniums (ex Nalco), poly amines, and poly vinyl pyridine and its derivatives.as well as cationic polyacrylamides, such as Accepta (ex Accepta).

Suitable anionic polyelectrolytes are sulphonated polymers and carboxylated polymers, and mixtures thereof. Commercially available anionic polyelectrolytes are polystyrene sulfonate, such as Flexan ® (ex National Starch) and Polycarboxylates, such as the Sokolan™ series (ex Basf)

Both the cationic and anionic polyelectrolytes, preferably have a molecular weight of at least 200 D, more preferably at least 500 D, still more preferably at least 1000 D. The molecular weight is preferably not more than 5,000,000 D, preferably less than 100,000 D, still more preferably less than 10,000 D. The polyelectrolytes can be homodisperse or polydisperse covering a broad molecular weight range.

The polyelectrolyte may be present in the coating in a concentration of at least 0.5%, preferably at least 1%, more preferable at least 2% or even at least 4% by weight of the dry coating. The polyelectrolyte is preferably present in a concentration of not more than 30%, preferably not more than 20%, more preferably not more than 15%, or even less than 10% by weight of the dry coating. The amount of carbon and polyelectrolyte may be adjusted so as to balance the capacitance of the anode and cathode electrodes. In practice this means that more polyelectrolyte and/or carbon may be used for the anode than for the cathode electrode.

### Binder

The binder may be any conventional adhesive. The binder may be mixable with carbon material. Preferably the binder is a water based adhesive. Binder systems may be selected for their ability to wet the carbon particle or current collector materials, or surfactants or other agents may be added to the binder mixture to better wet the carbon particles or graphite foil. Suitable commercial binder materials may be polyacrylic based binders such as the Fastbond™ range from 3M™.

The binder may be present in the coating in a concentration of at least 1%, preferably at least 2%, more preferable at least 5% by weight of the dry coating. The binder is preferably present in the coating in a concentration of less than 50%, preferably less than 40%, more preferably less than 30%, even more preferably less than 20%, still more preferably less than 15% by weight of the dry coating.

### Carbon

The carbon in the coating of the present invention comprises activated carbon, and optionally any other carbon material, such as carbon black. The activated carbon may be steam activated or chemically activated carbon, preferably steam activated carbon, such as DLC A Supra Eur (ex Norit). The carbon preferably has a specific surface area of at least 500 m2/g, preferably at least 1000 m2/g, more preferable at least 1500 m2/g. The anode and cathode may even be made out of different carbon materials. The higher the carbon surface area is, the higher is the ion storage capacity of the current collector. The specific surface area of carbon may for instance be measured by the B.E.T. method, as commonly used in the art.

The carbon may be present in the coating in a concentration of at least 50%, preferably at least 60%%, more preferable at least 70%, or even at least 75% by weight of the dry coating. The composition generally does not contain more than 98.5% by weight of the dry coating of carbon.

### Solvent

The solvent, suitable for mixing the coating paste may be any solvent suitable for dissolving the polyelectrolyte, preferably an aqueous solvent, more preferably water. The solvent is generally evaporated from the paste to form a solid coating on the current collector. The evaporation may for instance be achieved by exposure to air (ambient or heated). The solvent may be present in an amount of 20-80% of the total paste, but is generally present in an amount of about 40-50% of the total paste, before drying. After drying the coating preferably contains less than 25% solvent, more preferably less than 15%, still more preferably less than 10%.

### Method

In one embodiment the present invention provides a method for preparing a coated current collector, comprising the steps of
Preparing a coating paste comprising:
Carbon;
Binder;
Polyelectrolyte; and
Solvent

Applying the coating paste on a current collector; and drying the coated current collector.

Drying the coated current collector may be done at a temperature range from 15°C, preferably 30°C to 120°C. The temperature range may exclude 70°C. The temperature range may be from 25°C to smaller than about 70°C, preferably 69°C and from larger than 70°C, preferably 71°C to smaller than 120°C.

For the manufacturing of the coated current collector, the carbon paste may be applied by paste-, blade-, dip- spray- or spin coating as single layers or multiple layers as well as by gravure roll coating, extrusion coating or by lamination or screen printing. For example, the screen printing process consists of forcing the carbon paste through a stencil covered substrate, e.g. grafoil ® or through a wire mesh which has been mounted in a sturdy frame. In this case the carbon paste only goes through the open areas of the stencil and is deposited onto a printing substrate, e.g. grafoil ®, positioned below the frame. Manual screen printing can be accomplished with only a few simple items: a sturdy frame, screen fabric, stencils, squeegees, and carbon paste. Automatic press equipment can be used which would greatly speed up the process.

### Dry electrode

The dry electrode made by the method of the invention, as coated onto the current collector, generally has a thickness of at least 50, preferably at least about 100, more preferably at least about 200 micrometer; and preferably less than 1000, more preferably less than 500 micrometer.

Commercially available electrodes, such as disclosed in US2005/0042513, typically have a capacity of 10-25 F/g when applied to FTC. The electrodes of the present invention generally have a capacity of more than 25 F/g, more preferably at least 30 F/g.

### Current collector

The current collector may be any common type of current collector. The material of which the current collector is made, is a conducting material. Suitable materials are e.g. carbon, such as graphite, or carbon mixtures with a high graphite content, metal, such as copper, titanium, platinum, (stainless) steel, nickel and aluminium. The current collector is generally in the form of a sheet. Such sheet is herein defined to be suitable to transport at least 33 Amps/m² and up to 2000 Amps/m². When a surface of graphite foil is used, such surface may be corona treated, plasma etched, chemically or mechanically abraded or oxidized to enhance binder adhesion. The thickness of a graphite current collector then typically becomes from 100 to 1000 micrometer, generally 200 to 500 micrometer.

### Charge barrier layer

Charge barriers have been disclosed in US 6,709,560 for use in FTC. The present invention provides as an embodiment a coated current collector, as disclosed herein above, further comprising a charge barrier applied to the electrode coating layer, the charge barrier comprising a membrane, selective for anions or cations, the charge barrier being applied to the electrode coating layer as a further coating layer or as a laminate layer.

In another embodiment, the invention provides a system comprising the coated current collector according to the invention, comprising carbon, binder and polyelectrolyte, in combination with a separate conventional charge barrier as disclosed in US 6,709,560.

Suitable membrane materials may be homogeneous or heterogeneous. Suitable membrane materials comprise anion exchange and/or cation exchange membrane materials, preferably ion exchange materials comprising strongly dissociating anionic groups and/or strongly dissociating cationic groups. Examples of such membrane materials are Neosepta™ range materials (ex Tokuyama), the range of PC-SA ™and PC-SK ™(ex PCA GmbH), ion exchange membrane materials ex Fumatec, ion exchange membrane materials Ralex™ (ex Mega) or the Excellion ™ range of heterogeneous membrane material ex Snowpure).

### Stack

An FTC normally comprises at least one repeating unit of:
- anionic current collector/electrode
- optionally an anion exchange membrane as charge barrier
- conventional FTC spacer
- optionally a cation exchange membrane as charge barrier
- cathode current collector/electrode.

In practice the number of repeating units in a stack may be limited, for example by the number of current collectors that can be practically bundled and connected to the connector or by the required stack compression force. In practice this means that a conventional FTC stack typically comprises 1 to 20 repeating units. The coated current collectors may have a lower contact resistance between electrode and current collector, resulting in a lower required compression force per repeating unit. Therefore the required compression force for the same number of repeating units may be lower, or the number of repeating units in the FTC can be increased at constant compression force. It is preferred that the number of repeating units in a FTC may be at least 1, preferably at least 5, more preferably at least 10, still more preferably at least 20. For practical reasons, the number of repeating units is generally not more than 200, preferably not more than 150, not more than 100, or even not more than 50.

The stack may be compressed at a pressure of less than 3 bar, preferably not more than 1 bar, preferably not more than 0.3 bar, or even less than 0.1 bar.

The coated current collectors of the present invention enable the configuration of an FTC stack in spirally wound form, amongst others due to the lower electrical contact resistance of the carbon coated current collectors. In such spirally wound configuration, the FTC stack typically comprises at least 1 repeating unit. Typically the FTC stack in spirally wound form comprises less than 20 repeating units.

### Applications of the coated current collector FTC

The coated current collectors are especially useful in FTC devices that require low system cost for example in domestic appliances such as coffee makers, espresso machines, washing machines, dish washers, refrigerators with ice or water dispensers, steam irons, etc, where the removal of hardness ions such as calcium and magnesium, as well as other ions is beneficial. They can also be used for residential water treatment such as point of use devices as well as point of entry devices for whole households. These electrodes can also be used for commercial and industrial applications, e.g. water treatment in agriculture (e.g. treatment of ground water and surface water), boiler water, cooling towers, process water, pulp and paper, laboratory water, waste water treatment, mining as well as for the production of ultra pure water. Finally the electrodes may be used for the removal of problem ions such as nitrate in e.g. swimming pools and arsenic and/or fluoride in e.g. ground water.

The invention will now be illustrated by means of the following non-limiting examples.

### Example 1

Preparation of an anode coated current collector (total dry weight: 4g).
- Dilute polyethyleneimine (Lupasol® ex BASF) into water in order to obtain a 20% weight solution.
- Introduce 2,8g of the 20% weight polyelectrolyte solution in a beaker.
- Add 4g of water and mix to get a homogeneous solution.
- Add approximately 1,6g of carbon particles (A Supra Eur ex Norit) and mix until the particles are fully dispersed.
- Add the rest of the carbon particles (the total amount of carbon has to be 3,20g) and mix until the particles are fully dispersed.
- Introduce 0,46g of the binder and mix to get a homogeneous mixture.
- Check the viscosity of the mixture: if it is too viscous, add some water or if it is too liquid, wait few minutes, some water will evaporate.
- Spread the paste on the graphite foil (speed: 5mm/s).

### Anode coating composition

o Polyelectrolyte: polyethylenimine PEI from BASF (Lupasol ®) → 14%
o Activated carbon: A Supra Eur ex Norit → 80%
o Binder: Scotch-Weld/Pressure Sensitive Adhesive from 3M™ → 6%

Preparation of a cathode coated current collector is done in a similar way except that the polyelectrolyte is replaced by an electrolyte specifically suited for a Cathode e.g Flexan II, poly (4-styrenesulfonate) Mw:130000 (ex National Starch)

The desalination results have been tested in a small FTC cell (Mini Cell), containing a single unit cell (total electrode area: 36 cm²) as well as in a small FTC stack which can contain up to 13 repeating unit layers (total electrode area ca 1000 cm² ).

**Table 1: Measured thicknesses of dried electrodes for different applied coatings thickness, showing the effect of drying temperature.**

| | Thickness coating dried at room temperature (ca 24°C) | | | Thickness coating dried at 75°C temperature | | |
|---|---|---|---|---|---|---|
| Applied (µm) | Measured (µm) | % (measured/ applied) | % loss | Measured (µm) | % (measured/ applied) | % loss |
| 100 | 97.5 | 97.5 | 2.5 | 70.0 | 70.0 | 30.0 |
| 250 | 205 | 82.0 | 18.0 | 157.5 | 63.0 | 37.0 |
| 350 | 277.5 | 79.3 | 20.7 | 242.5 | 69.3 | 30.7 |
| 450 | 362.5 | 80.6 | 19.4 | 350.0 | 77.8 | 22.2 |

Table 1 shows that when the electrodes are dried in an oven at 75 °C, then a significant reduction in electrode thickness is observed. For example, for a coating at an applied thickness of 250µm (a characteristic thickness for carbon electrodes in FTC), a shrinkage of 37% is observed when the electrodes are dried at 75 °C compared to only 18% when dried at room temperature. This means that significantly denser electrodes can be obtained when the carbon coatings are dried at elevated temperatures.

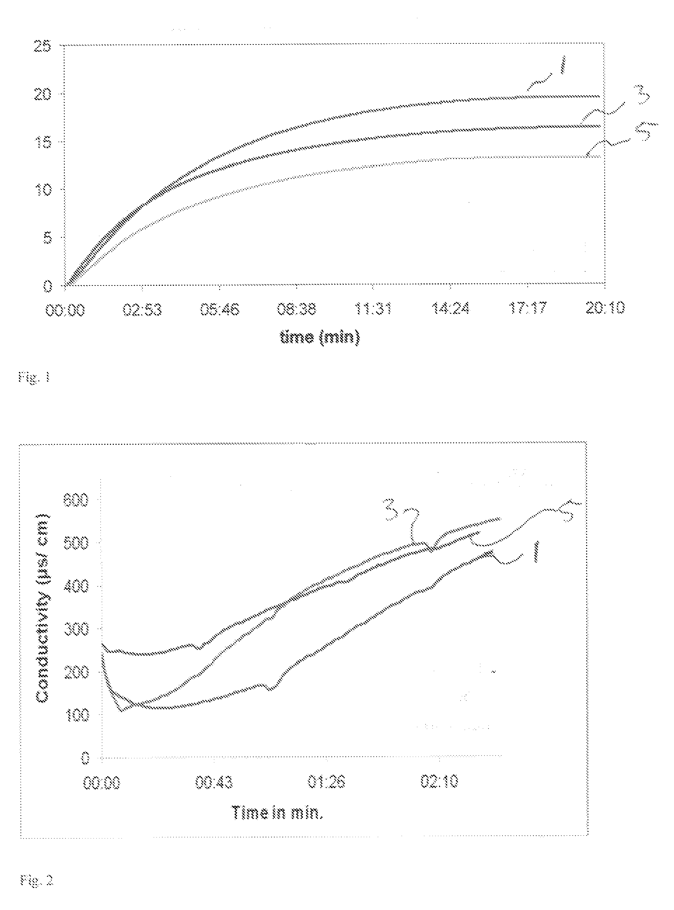

Figure 1 is a graph of the amount of NaCl removed by the FTC apparatus for de-ionizing water using a current collector prepared with the method according to the invention. Figure 1 shows the speed of ion adsorption as well as the maximum ion adsorption capacity for the carbon coated electrodes, which are dried at room temperature 3 as well as at 75°C 1. The amount of NaCl removed is measured in mg NaCl per gram carbon and the amount is measured over from 0 to 20:10 minutes. For comparison we have also included the results for a good quality commercial electrode 5. Nevertheless, figure 1 shows that both coated electrodes outperform the commercial electrodes and also that the coatings that were dried at higher temperature have about 20% higher ion storage capacity on a weight by weight bases. The ion adsorption onto different carbon electrodes was measured in a Mini Cell.

In order to further test the coated electrodes in a FTC system we built a small FTC stack, which contained 26 layers of carbon at a total weight of 9.724 g. At a same weight basis we needed 18 layers of commercial Teflon based electrodes.

Figure 2 is a graph 1 of the conductivity of water coming from the apparatus for de-ionizing water using a current collector prepared with the method according to the invention. Figure 2 shows salt removal in a small FTC stack during 150 sec of desalination for current collectors coated at room temperature 3 as well as for commercial electrodes 5. The feed water contained 500ppm NaCl and the flow rate was 100ml/min. Fig 2 shows that the desalination efficiency is higher for the coated electrodes compared to the commercial electrode. The desalination continues longer for the electrode 1 comprising a coated current collector according to the invention and also the total amount of removed salt is higher for this coated electrodes. Again the coatings that have been dried at 75°C 1 outperform those that have been dried at room temperature 3. More specifically, the electrodes that have been dried at 75°C remove about 47% more salt than the commercial electrodes in a typical FTC experiment.

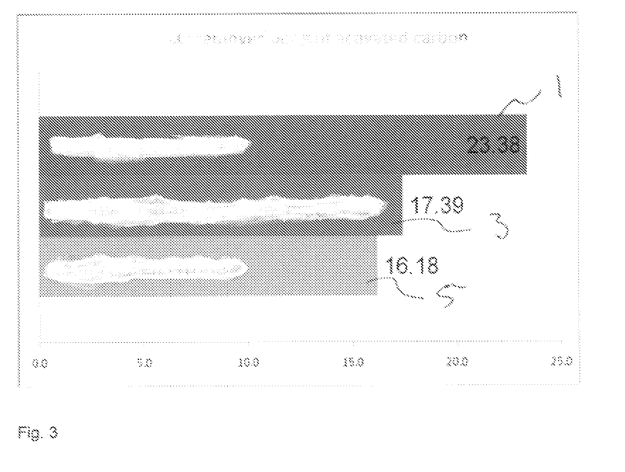

Figure 3 is a graph of the total amount of NaCl removed per gram of activated carbon in the apparatus for de-ionizing water using a current collector prepared with the method according to the invention 1, a current collector dried at room temperature 24°C 3 and commercial electrodes 5. Again, the coatings that have been dried at 75°C 1 outperform those that have been dried at room temperature 3 and the commercial electrodes 5.

### Example 2

An abrasion test has been done with a linear scrubbing rig, which comprises a plateau onto which the coated electrode with an applied coating thickness layer of 250 µm is fixed and a moving arm with at the end a half cylindrical surface placed perpendicular onto a arm, where the cylindrical surface is made from PVC with a curvature of 1.5cm and a width of 6cm. Different weights can be placed on top of the cylinder and for the current experiment a weight of 1.850 kg has been used such that there was (1850/6) 308 Kg/cm. The arm moves with a speed of 30 strokes.min⁻¹. The total area that is used for the abrasion test is 120cm² of coated electrodes and the assessment was made on 36 cm² electrode area. As a measure of abrasion resistance we measured the number of strokes that are needed before the grafoil® current collector becomes visible to the eye, after which the experiment was stopped. The more strokes that are needed the more abrasion resistant the electrodes are. Alternatively an ASTM D4060 Taber abrasion tester may be used.

**Table 2 shows the number of strokes that are needed before grafoil becomes visible to the bare eye for electrodes that have been dried for 2 hours at room temperature and for electrodes that have been dried for 2 hours at 80°C.**

| Temperature | Number Strokes |
|---|---|
| 24°C | 27 |
| 80°C | 80 |

The coated current collectors with the higher abrasion resistivity also have an improved salt removal capacity over the coated current collectors with a lower abrasion resistivity. The abrasion resistivity is such that less than 9.25 µm (250 µm /27 strokes) per stroke is removed from the coating layer if the electrodes have been dried at more than 24°C. Preferably the abrasion resistivity is such that 3.13 µm (250 µm /80 strokes) is removed from the coating layer if the electrode has been dried at 80 °C.

Carbon coated electrodes have excellent salt removal capacity compared with good quality commercial electrodes. The differences are becoming larger when the wet coatings are dried at increased temperatures. This also has advantages for the manufacturing of the coated electrodes because of reduced drying times and shorter production lines. In addition, the heat treated electrodes are more compact and more resistant to abrasion, which is another key advantage in the manufacture and handling of the electrodes.

While specific embodiments of the invention have been described above, it will be appreciated that the invention may be practised otherwise than as described. The description is intended to be illustrative, not limiting. Thus, it will be apparent to one skilled in the art that modifications may be made to the invention as described without departing from the scope of the claims set out below.

## Claims

1. Method for preparing a coated current collector, comprising:
a preparing a coating paste comprising:
i. dry coating materials comprising:
- 50 - 98.5 dry mass weight % of carbon having a specific surface area of at least 500 m2/g;
- 1 - 40 dry mass weight % of binder;
- 0.5 - 30 dry mass weight % of polyelectrolyte; and
ii. 20 - 80 % based on the total paste of solvent b applying the coating paste on one side of the current collector;
c applying the coating paste on another side of the current collector; and,
d drying the coating of the current collector at a temperature range from about 15°C to about 120°C.

2. Method for preparing a coated current collector according to claim 1, wherein the coating is provided on both sides of the current collector simultaneously.

3. The method according to claim 1 or 2, wherein the temperature range comprises from about 30°C to about 120°C.

4. The method according to any of the preceding claims, wherein the temperature range excludes a temperature of about 70°C.

5. The method according to any of the preceding claims, wherein the solvent is an aqueous solvent.

6. The method according to any of the preceding claims, wherein the temperature range comprises a temperature from about 15°C to smaller than about 70°C and from larger than about 70°C to smaller than about 120°C.

7. The method according to any of the preceding claims, wherein the temperature range comprises a temperature from about 30°C to about 69°C and from larger than about 71°C to smaller than about 120°C.

8. Method according to any of the preceding claims, wherein the carbon paste is applied by paste-, blade-, dip- spray- or spin coating or by gravure roll coating, extrusion coating or by lamination or screen printing.

9. Method for preparing a coated current collector, comprising the steps of
a preparing a coating paste comprising:
i. dry coating materials comprising:
- 50 - 98.5 dry mass weight % of carbon having a specific surface area of at least 500 m2/g;
- 1 - 40 dry mass weight % of binder;
- 0.5 - 30 dry mass weight % of polyelectrolyte; and
ii. 20 - 80 % based on the total paste of solvent
b applying the wet coating paste on one side of the current collector;
c applying the wet coating paste on another side of the current collector; and,
d drying the coated current collector so that the thickness of the wet coating paste layers shrink with more than 21%, more preferably with more than 25%, even more preferably with more than 30% and most preferably with more than 35%.

10. Method for preparing a coated current collector according to claim 9, wherein the coating is provided on both sides of the current collector simultaneously.

11. Double sided coated current collector, the coating comprising:
a 50 - 98.5 dry mass weight % of carbon having a specific surface area of at least 500 m2/g;
b 1 - 40 dry mass weight % of binder; and,
c 0.5 - 30 dry mass weight % of polyelectrolyte, wherein the abrasiveness of the coating is such that less than 9.25 µm, preferably les than 6 µm and even more preferably less than 3.13 µm of the coating is removed per stroke in a linear scrubbing rig with a weight of 308Kg/cm scrubbing over the coating.

12. Double sided coated current collector, the coating comprising:
a 50 - 98.5 dry mass weight % of carbon having a specific surface area of at least 500 m2/g;
b 1 - 40 dry mass weight % of binder; and,
c 0.5 - 30 dry mass weight % of polyelectrolyte, wherein the dry mass density of the coating is larger than 0.3 preferably larger than 0.35 and even more preferably larger than 0.4 g/cm³.

13. Double sided coated current collector according to claim 11 or 12, further comprising a charge barrier applied to the coating layer, the charge barrier comprising a membrane, selective for anions and/or cations, the charge barrier being applied to the coating layer as a further coating layer or as a laminate layer.

14. An apparatus for de-ionizing water comprising the coated current collector according to any of the preceding claims.

15. An apparatus for de-ionizing water comprising a stack of at least one repeating unit comprising:
a an anode comprising a coated current collector according to any of claims 1-14;
b a spacer; and,
c a cathode comprising a coated current collector according to any of claims 1-14.
